(19) Europäisches Patentamt
European Patent Office
Office européen des brevets

(11) **EP 4 645 211 A1**

(12) **EUROPEAN PATENT APPLICATION**

(43) Date of publication:
**05.11.2025** Bulletin 2025/45

(21) Application number: **24173314.6**

(22) Date of filing: **30.04.2024**

(51) International Patent Classification (IPC):
**G06T 5/60** (2024.01)        **G06T 11/00** (2006.01)

(52) Cooperative Patent Classification (CPC):
**G06T 5/60; G06N 3/047; G06N 3/084; G06N 7/01;**
**G06T 11/00;** G06N 3/045; G06N 3/08; G06T 7/194;
G06T 2207/20081; G06T 2207/20084;
G06T 2210/12; G06V 10/82

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Robert Bosch GmbH**
**70442 Stuttgart (DE)**

(72) Inventors:
• **Schmedding, Sabrina**
**75233 Tiefenbronn (DE)**
• **Wang, Ruyu**
**71229 Leonberg (DE)**

(54) **DEVICE AND METHOD FOR SYNTHETIC IMAGE GENERATION WITH PREDEFINED LAYOUT**

(57)     Computer-implemented method of training a machine learning system for generating images from a predefined layout. The machine learning system is a diffusion probabilistic model with an encoder part and a decoder part, wherein a normalization layer in a residual block of the decoder part comprises weighted layout-aware affine transformation parameters $\gamma$ and $\beta$, determined from layout-aware affine transformation parameters $\gamma'$ and $\beta'$ by multiplication with a weighted semantic map, wherein the weighted semantic map comprises a sum of two contributions, wherein the first contribution comprises a non-overlapping semantic map computed from determined and size-ranked object probabilistic masks and wherein the second contribution comprises an edge-aware semantic map, determined from extended object probabilistic masks, wherein an extended object probabilistic mask is extended with respect to the corresponding object probabilistic mask by one pixel along the borders.

**Fig. 1**

## Description

Technical field

The invention relates to a method of training a machine learning system for generating digital images from a predefined layout, a corresponding training system, a computer program, and a machine-readable storage medium.

Technical background

Large amounts of data are a common requirement in training of machine learning systems and may be particularly relevant when the trained machine learning system shall, e.g., be used in safety-critical situations such as (partly-) autonomous driving or be used in automated optical inspection of particularly safety-relevant or valuable products. However, such large amounts of data may not always be available at large scale for all scenarios/cases required for reliably training a machine learning system. For instance, on highly optimized production lines, (image data of) defective samples are hardly acquired, while (image data) of non-defective samples come almost for free.

Prior art

Layout-to-image synthesis refers to a task where coarse information, e.g. object type and location, of an expected, to-be-generated image is given to generative machine learning systems for controllable complex scene generation. Such layouts, provided as an input to a generative machine learning system, offer strong guidance to the generation process while remaining relatively easily configurable by users. In https://arxiv.org/abs/1908.07500 a method of layout-to-image synthesis is proposed, wherein an instance specific layout aware (ISLA) norm is used to inject a layout information into a machine learning model based on a generative adversarial network (GAN).

Diffusion probabilistic models may be used for the task of image generation. Training of such models consists of two processes, a forward process, and a reverse process. In the parameter-free forward process, a small amount of (Gaussian) noise will be added to an input image at each timestep, until it turns into a (completely) noisy image. The reverse process trains a parameterized machine learning system, typically with a U-net like structure, for predicting and removing the added noise at each timestep. In addition to an input image, a diffusion probabilistic model may take layouts as inputs.

Disclosure of the invention

According to a first aspect, the invention relates to a computer-implemented method of training a machine learning system for generating images from/with a predefined layout. The images to be generated may be digital images. The machine learning system trained by the method shall produce synthetic images for training-data augmentation. The machine learning system is a diffusion model with an encoder part and a decoder part. The diffusion probabilistic model may be an adaptive diffusion model. The diffusion probabilistic model may comprise different layers, wherein a layer of the diffusion probabilistic model may take a feature map as an input and may calculate, by applying mathematical operations on the input feature map, another feature map as an output. The output of the last layer of the diffusion probabilistic model may be a denoised generated imaged (with respect to a noisy input image) with a predefined layout. The output of the last layer may also be a generated image (with respect to a Gaussian noise image) with a predefined layout. The diffusion probabilistic model may have a U-net structure, wherein layers of the encoder part reduce the dimensionality of respective input feature maps and wherein layers of the decoder part increase the dimensionality of respective input feature maps. The first layers of the decoder structure after the encoder structure may be referred to as bottleneck. A bottleneck may consist of convolutional layers that keep the spatial dimensions of feature maps, which are determined as outputs of these convolutional layers, the same as the spatial dimension of respective feature maps provided as input to the bottleneck (wherein these spatial dimensions are the smallest spatial dimensions in the network). Further, the convolutional layers of the bottleneck may increase or decrease the number of feature channels similar to computation steps that might be performed in layers of the encoder part. A predefined layout comprises a set of bounding boxes and labels assigned to the bounding boxes. Particularly, the set may comprise at least a single bounding box and its corresponding label(s) assigned to that bounding box. Each bounding box may have at least one assigned label. A bounding box defines a target region in an image lattice. The target region may have a rectangular shape. In another embodiment, the target region may have an irregular or a circular, or elliptical shape. The target region may be determined from the boundaries of the target region. A boundary of the target region may be given by at least one edge, wherein the boundary or the edge(s) of the target region separate the target region from at least one neighboring region adjacent to the target region. A boundary or an edge may be determined by the pixels at the boundary/edge(s) belonging to the target area and separating the target area from adjacent area(s), with at least one neighboring pixel not belonging to the target area. An image lattice is a two-dimensional grid of pixels. The image lattice may be defined by its width and its height. Both width and height may be given by a specific number of pixels, respectively. To each of the pixels in the two-dimensional grid of pixels, values indicating e.g. color or grayscale of the respective pixel may be assigned. The image lattice may have the dimensions of the image to be generated from the predefined layout. In other embodiments, the image lattice may also have a dimension differing from the image to be generated. In the latter cases, the image lattice might be coarser or might be finer than the lattice of the image to be generated. The label assigned to a bounding box in the set of bounding boxes is a word or group of words characterizing a class of at least one object to be generated within the target region defined by the respective bounding box. The respective object shall be generated within the corresponding bounding box according to the method described herein. An object may be (part of) a person, an animal, a plant, a landscape, or an item. An object may also be a (part of) a tool, a car, a manufacturing machine, or a product to be checked at the end of a production line to ensure product quality and/or identify defects. The machine learning system comprises a subnetwork for determining object probabilistic masks, wherein the subnetwork receives object-style embeddings and the bounding boxes as inputs and determines object probabilistic masks as outputs. The subnetwork may comprise a series of feed-forward layers, e.g. convolution layers or fully-connected layers, followed by a sigmoid transformation. Object probabilistic masks may help to place objects in the image to be generated with fine grained geometric and style properties. An object-style embedding is calculated from an embedding of a label assigned to a bounding box and a random style, wherein a style may be a structural variation and/or an appearance variation of an object to be generated, wherein the random style is a randomly sampled vector in an embedding space (latent space), and wherein the vector encodes the structural and appearance variations of an object to be generated. The random style may be determined from a predefined (or pre-definable) mean value vector - that is, a vector characterizing a mean value of the vector characterizing the random style - and a predefined (or pre-definable) variance. From predefined mean value and variance, a randomly sampled vector determining the random style may be determined by drawing from a gaussian distribution with said mean value and variance. A structural variation may be given by a variation in a shape and/or a pose of the object, wherein an appearance variation may be given by a variation in the color or the grayscale, and/or the brightness of the object. The machine learning system comprises residual blocks with at least one normalization layer, respectively. A residual block may comprise several layers and a skip connection that bypass one or several layers. In a U-net structure, skip connections may also inject feature maps from the encoder part into the decoder part. A normalization layer in a residual block of the decoder part of the machine learning system comprises weighted layout-aware and spatially adaptive affine transformation parameters $\gamma$ and $\beta$. Such aforementioned normalization layer injects the layout conditions into the denoising process in order to guide the image generation process. The affine transformation in such normalization layer maps feature maps, provided as input to the normalization layer, to output feature maps. The output feature maps may be the output of the respective normalization layer. The parameters $\gamma$ and $\beta$ are determined from layout-aware affine transformation parameters $\gamma'$ and $\beta'$ by multiplication with a weighted semantic map, wherein the weighted semantic map comprises a sum of two contributions. The first contribution comprises a non-overlapping semantic map computed from the determined and size-ranked object probabilistic masks. In the image lattice of the non-overlapping semantic map, each pixel is assigned one object or object class, only. In other words, one object or object class is unambiguously assigned to each of the pixels in the image lattice of the non-overlapping semantic map. Object-probabilistic masks may be size-ranked by arranging them in a ranked order from the largest to the smallest or vice versa, wherein the order rank refers to the size, i.e. area and/or number of pixels of the object-probabilistic masks. In general, size-ranking may refer to ranking, e.g., masks with respect to their size, i.e. their area, volume, or, their maximum number of pixels comprised. It may be noted that such above-described semantic maps, when used within image generation methods, may lead to unnatural boundaries in the generated images. One reason might be the sharp transitions/edges between regions adjacent to each other but with pixels with differing objects/object classes assigned to in the non-overlapping semantic map. The second contribution in the weighted semantic map comprises an edge-aware semantic map, wherein the edge-aware semantic map is a semantic map determined from size-ranked extended object probabilistic masks. An extended object probabilistic mask is extended with respect to the corresponding object probabilistic mask by one pixel, respectively, at the borders. Yet in other words, an extended object probabilistic mask may be determined from a corresponding object probabilistic mask by adding an additional row of pixels to the corresponding object probabilistic mask along its borders. The method comprising the following steps:

- Receiving a set of training data, wherein each data point comprises a noisy image and corresponding layouts comprising bounding boxes and labels assigned to the bounding boxes. A noisy image may be determined from a noise-free image by successively adding, in a predefined/pre-definable number of steps, to the noise-free image random variations in color and/or brightness, wherein the random variations may be added by adding randomly sampled values to the image's pixel values determining color and/or brightness. It may further be noted that the bounding boxes and the labels corresponding to a noisy image are determined from the image composition and image content of the noisy (or corresponding noise-free) image;
- Determining by the subnetwork object probabilistic masks for a training data point;
- Determining by the encoder part a feature map for the noisy image of the training data point;
- Determining by a $j^{th}$ normalization layer of the decoder part an output feature map from the input feature map of said $j^{th}$

normalization layer by normalization of the input feature map and a subsequent affine transformation with parameters $\gamma$ and $\beta$ of the j$^{th}$ normalization layer. Normalization might be, e.g., batch normalization;

- Determining an output image as output of the decoder part and adjusting parameters of the machine learning system subject to a training objective.

Thereby, the training objective comprises a comparison of the noise-free image corresponding to the noisy input image and the determined output image.

In order to avoid cases where the bounding boxes in the layout's set of bounding boxes would not cover the entire image, it might be foreseen that the layout may comprise a background bounding box covering the entire/full image size, with corresponding background label.

Advantageously, the method proposed herein allows to train a machine learning system, wherein the trained system, at inference time, eventually may transform coarse layout information - a collection of bounding boxes and corresponding labels - into realistic images. Thereby, from a rough sketch of a complex scene/environment/detail a high quality, realistic image may be generated with particular control on the image scene/composition of details in the scene. The method of training proposed herein may, among others, allow the trained machine learning model to generate improved and more natural boundaries of objects in the respective generated images according to a predefined layout. According to the above described method, the layout is not directly fed into the encoder of the model's U-net like structure - built from encoder and decoder - as it is the case for the noisy image, but the layout is instead first processed into a "global condition" and then injected into normalization layers of the decoder part of the machine learning system for conditioning the generation process.

Preferably, the weighted semantic map in the j$^{th}$ residual block of the decoder part is determined by a summation over all weighted semantic maps $W_i^j$, ($i = 1 \ldots N$),with

$$W_i^{\,j} = \left(m_i^{j,non} \odot M_i^j\right) + \alpha \cdot \left(m_i^{j,ea} \cdot w_i\right).$$

Thereby, $w_i$ is a learnable edge weight for object $i$ and $\alpha$ is a hyperparameter, $M_i^j$ is the object probabilistic mask corresponding to object $i$ in the j$^{th}$ residual block, $m_i^{j,non}$ is a non-overlapping semantic map determined from object probabilistic mask $M_i^j$, $m_i^{j,ea}$ is an edge-aware semantic map determined from object probabilistic mask $M_i^j$ with an additional extension of the region of mask $M_i^j$ of one pixel at the borders, and wherein Q stands for an element wise multiplication.

Perferably, an object probabilistic mask $M_i^{j+1}$ in the (j+1)$^{th}$ residual block of the decoder part is determined by $M_i^{j+1} = (1 - \eta) \cdot M_i^0 + \eta \cdot M_i^j$, with $\eta$ a weight determined during training of the machine learning system and $M_i^0$ the initial probabilistic mask of object $i$, $i = 1, \ldots N$, determined by the subnetwork.

Preferably, the non-overlapping semantic map is determined from the object probabilistic masks $M_i^j$ by successively assigning labels to the pixels of the non-overlapping semantic map, wherein each pixel is assigned one label, wherein a pixel is assigned the label from mask $M_i^j$, if $M_i^j$ is the size-wise smallest mask involving the pixel.

Preferably, the layout-aware affine transformation parameters $\gamma'$ and $\beta'$ are determined by the following steps:

- Determining object-specific scaling $\gamma_c^j$ and bias $\beta_c^j$ values from the object-style embeddings by a linear projection, wherein the linear projection comprises learnable projection parameters,

- Expanding $\gamma_c^j$ and $\beta_c^j$ to their corresponding bounding boxes by assigning the respective values of $\gamma_c^j$ and $\beta_c^j$ to each pixel of the respective corresponding bounding box to obtain the parameters $\gamma'$ and $\beta'$.

Parameters $\gamma'$ and $\beta'$ are elements in $R^{h \times w \times c}$, wherein $h$ and $w$ denote height and width of the respective bounding box and $c$ refers to the dimension of the object-style embedding. The dimension of the object-style embedding, $c$,

should be an integer and is determined by the sum of the dimension of the embedding of the label assigned to the respective bounding box and the dimension of the randomly sampled style.

In other words, the layout-aware affine transformation parameters γ' and β' are determined by first determining object-specific scaling $\gamma_c^j$ and bias $\beta_c^j$ values from an object-style embedding, respectively, by a linear projection (comprising learnable parameters). Object-specific scaling $\gamma_c^j$ and bias $\beta_c^j$ values are elements in $R^{1 \times 1 \times c}$, where c denotes the dimension of the object-style embedding. In a next step, the values of the respective scaling $\gamma_c^j$ and bias $\beta_c^j$ are assigned to each pixel of the corresponding bounding box, respectively, to determine parameters γ' and β'. Accordingly, parameters γ' and β' are elements in $R^{h \times w \times c}$.

Preferably, the machine learning system further comprises mask attention layers in the decoder part, wherein the key and value embeddings in a $k^{th}$ mask attention layer are determined from key and value linear projections of a $k^{th}$ feature map in the decoder part, wherein the $k^{th}$ feature map is provided as an input to the $k^{th}$ mask attention layer. The key and value linear projections of a $k^{th}$ feature map may be determined as output of respective convolutional layers (learnable linear projections), wherein the key and value linear projections take the $k^{th}$ feature map as an input, respectively.

Determination of the query embedding comprises the following steps:

- Determining a pixel-wise semantic map $m^{k,attn}$, by first arranging the object probabilistic masks $M_i^k$, i = 1, ... N, according to their positions predefined by the layout, wherein $M_i^k$ is the object probabilistic mask corresponding to object i in the $k^{th}$ residual block preceding the $k^{th}$ mask attention layer and wherein $M_i^k$, i = 1, ... N, are provided as an input to the $k^{th}$ mask attention layer,

  and, by, second, keeping at each pixel only the value of the respective object probabilistic mask $M_{i'}^k$, which is the highest value out of the values of the object probabilistic masks $M_i^k$, i = 1,... N, contributing to the respective pixel,

- Determining an extended pixel-wise semantic map $\tilde{m}^{k,attn}$ from the pixel-wise semantic map $m^{k,attn}$ by extending the pixel-wise semantic map $m^{k,attn}$ at each pixel with the respective object-style embedding of object i according to the object probabilistic mask $M^k$ determining the value of the respective pixel,

- Determining a query embedding by embedding a query linear projection of the extended pixel-wise semantic map $\tilde{m}^{k,attn}$.

When arranging the object probabilistic masks $M_i^k$, i = 1, ... N, which are provided as an input to the $k^{th}$ mask attention layer, according to their positions predefined by the layout, additionally, out-of-bounding box values, if any, may be removed.

The pixel-wise semantic map $m^{k,attn}$ should be an element of $R^{h \times w \times 1}$, whereas the extended pixel-wise semantic map $\tilde{m}^{k,attn}$ should be an element of $R^{h \times w \times c}$, as the latter $\tilde{m}^{k,attn}$ is determined from the former $m^{k,attn}$ by filling/assigning an respective object-style embedding to each pixel of the former semantic map $m^{k,attn}$ according to which object the respective pixel belongs.

An output of the $k^{th}$ mask attention layer may be determined by the following formula:

$$Attention(Q_k, K_k, V_k) = softmax\left(\frac{Q_k K_k^T}{\sqrt{d_K}}\right) V_k,$$

wherein $Q_k$ denotes the query embedding obtained by embedding the query linear projection of the extended pixel-wise semantic map $\tilde{m}^{k,attn}$, $Q_k = \varphi_Q(m_k^{attn})$. Key and value, $K_k$ and $V_k$, are determined from key and value linear projections of a $k^{th}$ feature map $feat_k$, $K_k = \varphi_K(feat_k)$, $V_k = \varphi_V(feat_k)$. Thereby, $\varphi_Q$, $\varphi_K$, and $\varphi_V$ denote linear projection layers. $d_K$ denotes the dimension of the key vector $K_k$.

With such a mask attention layer the attention to the given conditional information provided by the layout may be further strengthened. Particularly, by the above described cross-attention mechanism, attention is drawn/particularly paid to localized object regions according to a given layout.

It may be noted that the machine learning system may comprise at least one standard self-attention layer, for which the query embedding is acquired from a respective input feature map. Optionally, in such cases, the above-described mask attention layer(s) may then be comprised in addition.

Preferably, images generated by the trained machine learning system are training data for an image classifier for image classification, particularly based on low-level features.

Training data for, e.g., an image classifier for image classification may not always be equally available at a large scale for all classes required. For instance, on highly optimized production lines, defective samples may be hardly acquired, while non-defective samples may come almost for free. Accordingly, in training of an image classifier for classifying images of samples in an end-of-line inspection/for optical inspection at such optimized production line, the miss-balance between available and abundant images of non-defective samples and rare images of defective samples must be balanced somehow. Another example may be given by rare traffic situations to be accounted for in image classification by image classifiers used within a system for assisted and/or automated driving. One way of mitigating such disbalance between rare and easy-to-obtain images of rare and frequent situations/samples, respectively, is training a (generative) machine learning system to produce synthetic images of rare situations/samples for augmentation of the training data of the image classifier.

For instance, a defect distribution and/or particular characteristics of defects as depicted in images from a production dataset may be "translated"/transferred into bounding boxes and corresponding labels. From such collection of bounding boxes and labels, layouts may be put together, from which synthetic images may be generated with the trained machine learning system. These synthetic images may be used for training defect detectors or classifiers in optical inspection.

Preferably, the images generated by the trained machine learning system depict a driving environment of at least a semi-autonomous robot, or at least a section of a defective sample or defective machine of a production line, or an environmental situation from the perspective of a surveillance camera.

Thereby, training data for, e.g., training an image classifier used in context of autonomous/assisted driving or robot navigation, automated inspection of products at a production line or building/interior/environment surveillance may be provided for an improved training of such image classifier.

According to a further aspect, the invention relates to a training system configured to carry out the training method according to steps and/or features described herein.

According to a further aspect, the invention relates to a computer program with machine-readable instructions, which, when executed on one or several

computer(s), cause the computer(s) to perform one of the computer-implemented methods described above and below. Furthermore, according to another aspect, the invention relates to a machine-readable storage medium, on which the above computer program is stored.

Embodiments of the invention will be discussed with reference to the following figures in more detail. The figures show:

Figure 1    shows an exemplary information flowchart for an embodiment of a method of training a machine learning system for generating digital images from a predefined layout;

Figure 2    shows another flowchart for a further embodiment of a method described herein;

Figure 3    a training system configured to carry out a method according to embodiments described herein;

Description of the embodiments

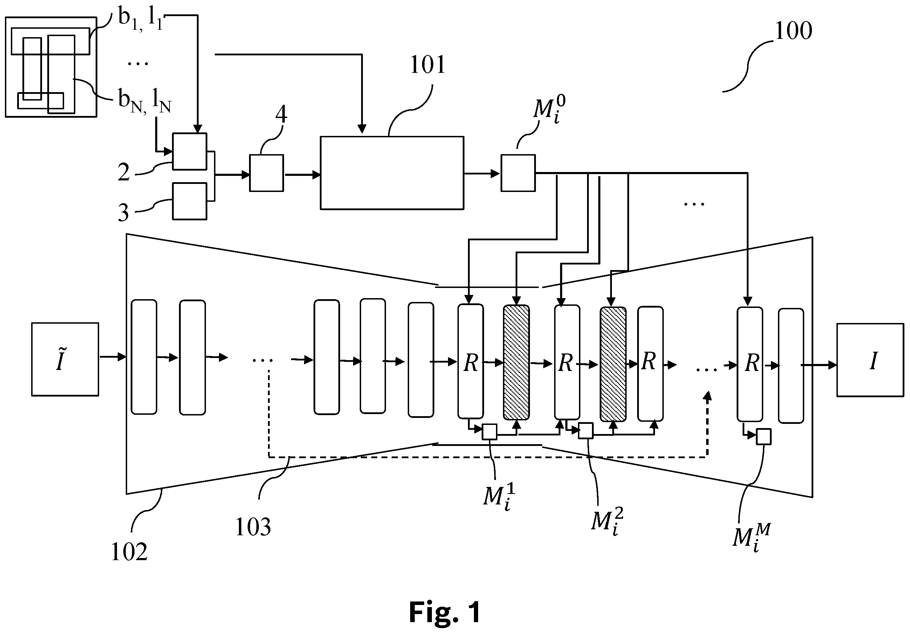

Figure 1 shows an exemplary information flow chart for an embodiment of a method of training a machine learning system 100 for generating images $I$ from/with a predefined layout ($\{b_i, l_i\}, i = 1, ..., N$). Machine learning system 100 is a diffusion probabilistic model with an encoder part and a decoder part. Predefined layout ($\{b_i, l_i\}, i = 1, ..., N$) may comprise a set of bounding boxes $b_1, ..., b_N$ and labels $l_1, ..., l_N$ assigned to the bounding boxes $b_1, ..., b_N$. A bounding box $b_1$ may define a target region in an image lattice, and a label $l_1$ assigned to a bounding box $b_1$ may be a word or group of words characterizing a class of at least one object to be generated within the target region defined by the respective bounding box $b_1$. Machine learning system 100 comprises a subnetwork 101 for determining object probabilistic masks $M_i^0, i = 1, ..., N$. Subnetwork 101 may receive object-style embeddings 4 as inputs and determines object probabilistic masks $M_i^0$ as outputs. An object-style embedding may be calculated from an embedding 2 of a label, e.g., $l_1$, assigned to a bounding box, e.g., $b_1$, and a random style 3. Machine learning system 100 comprises residual blocks, with at least one normalization layer and one feed-forward layer, respectively. Residual blocks may comprise skip connections and/or there may be skip connections 103 between residual blocks in the encoder and the decoder part of machine learning system 100. A normalization layer in a residual block $R$ of the decoder part of the machine learning system comprises weighted layout-aware affine transformation parameters $\gamma$ and $\beta$, wherein the parameters $\gamma$ and $\beta$ are determined from layout-aware affine transformation parameters $\gamma'$ and $\beta'$ by multiplication with a weighted semantic map. The weighted semantic map comprises a sum of two contributions: the first contribution comprises a non-overlapping semantic map computed from determined and size-ranked object probabilistic masks $M_i^j$. The second contribution comprises an edge-aware semantic map, wherein the edge-aware semantic map is a semantic map determined from size-ranked extended object probabilistic masks, wherein an extended object probabilistic mask is extended with respect to a corresponding object probabilistic mask $M_i^j$ by one pixel along the borders.

Machine learning system 100 may further comprise mask attention layers in the decoder part (denoted by the hatched layers in Figure 1). In a $k^{th}$ mask attention layer, key and value embeddings may be determined from key and value linear projections of the $k^{th}$ feature map in the decoder part. A corresponding query embedding may be determined by embedding a query linear projection of an extended pixel-wise semantic map $\tilde{m}^{k,attn}$ determined from object probabilistic masks $Mk, i = 1, ... N$ and object-style embeddings 4.

A training data point comprising a noisy image $\tilde{I}$ and corresponding layouts $(\{b_i, l_i\}, i = 1, ... , N)$ comprising bounding boxes $b_1, ..., b_N$ and labels $l_1, ..., l_N$ assigned to the bounding boxes may be provided to machine learning system 100. Noisy image $\tilde{I}$ is received by the encoder part of U-net-based system 102. Embeddings 2 are determined from labels $l_1, ..., l_N$, respectively. From these embeddings 2 together with a random style object-style embeddings 4 may be determined. For example, an object-style embedding 4 may be determined from an embedding of a label $l_i$ and a random style 3 by concatenation of the respective latent vectors. Subnetwork 101 may then receive the object-style embeddings 4 as an input and determine object probabilistic masks $M_i^0$ as an output. By the encoder part of the machine learning system 100 a feature map for noisy image $\tilde{I}$ may be determined. In particular, the encoder part may comprise several blocks, wherein each block may comprise several layers. For example, the encoder part may comprise residual blocks and attention blocks. In addition, the encoder part may comprise convolution layer and down-sampling layer. A layer and, accordingly, a block, may receive a feature map as an input and may determine another feature map as an output. The output is then provided as an input to the subsequent layer or block. The same may apply for layers and, accordingly, blocks in the decoder part of the machine learning system.

In the decoder part, a $j^{th}$ normalization layer, which may be part of a residual block $R$, may determine an output feature map from an input feature map of the $j^{th}$ normalization layer; the output feature map may be determined by normalization, e.g. batch normalization, of the input feature map and a subsequent affine transformation with parameters $\gamma$ and $\beta$ of the $j^{th}$ normalization layer.

Determination of parameters $\gamma$ and $\beta$ of the $j^{th}$ normalization layer comprises determination of weighted semantic maps $W_i^j$, ($i = 1 ... N$). For determination of the latter, object probabilistic masks $M_i^j$ in the $j^{th}$ residual block of the decoder part are required, which may be determined from object probabilistic masks $M_i^{j-1}$ provided as an output of the $(j-1)^{th}$ residual block R and the object probabilistic masks $M_i^0$. Output image 7 may be determined as output of the decoder part. Subsequently, parameters of the machine learning system 100 may be adjusted subject to a training objective.

It should be understood that the herein described method of training a machine learning system, given by a diffusion probabilistic model, is focused on the reverse, denoising, process, wherein the complete training process comprises a parameter-free forward process and the reverse process. Consider, for instance, an image $I_0$ sampled from a real data distribution $q(\cdot)$ and a layout $l = (\{b_i, l_i\}, i = 1, ... , N)$ as a condition; the goal of a conditional diffusion probabilistic model is to maximize the likelihood $p_\theta(I_0 | l)$ following the conditional data distribution $q(I_0 | l)$. Forward process and the reverse process are defined to achieve the desired data generation. Starting from $I_0$, the forward process $q(I_{1:T} | I_0)$ gradually adds a small amount of Gaussian noise at each timestep $t$:

$$q(I_t | I_{t-1}) = \mathcal{N}\left(I_t; \sqrt{\alpha_t} I_{t-1}, (1 - \alpha_t) \boldsymbol{I}\right), \tag{1}$$

where $1 - \alpha_t$ represents the noise magnitude and $\boldsymbol{I}$ represents a unit matrix. Assuming the added noise is from a diagonal Gaussian distribution and a sufficient amount is applied through the forward process, the acquired $I_T$ can be approximated

by $\mathcal{N}(0,I)$, that is a purely noise image. The reverse process $p_\theta(I_{0:T}|l)$ may then use a parameterized network to estimate the real posterior $q(I_{t-1}|I_t)$ by

$$p_\theta(I_{t-1}|I_t, l) = \mathcal{N}\left(I_{t-1}; \mu_\theta(I_t, l, t), \Sigma_\theta(I_t, l, t)\right), \qquad (2)$$

thereby progressively predicting a less-noisy image at each step to recover $I_0$. In accordance with https://arxiv.org/pdf/2006.11239, the optimization objective of the conditional diffusion probabilistic model may be simplified as

$$\mathcal{L}(\theta) = E_{t, I_0, l, \epsilon}\left[\left\|\epsilon - \epsilon_\theta(I_t, l, t)\right\|^2\right], \qquad (3)$$

where the model aims to predict the added noise for removal instead of the full image.

In other words, given an image $I$ and a random timestep $t \in \{0, 1, ..., T\}$, a noisy image $\tilde{I}$ may be acquired through equation (1). The goal of the conditional diffusion probabilistic model is to reconstruct $I$ by removing the added noise $\epsilon$ at timestep $t$ under the guidance of a given layout. This objective may be referred to as $\mathcal{L}_{simple}$ which is formulated in equation (3). Additionally, not only the noise may be modeled but also the variance $\Sigma_\theta\left(\tilde{I}_t, l, t\right)$ may be parameterized as well by

$$\Sigma_\theta\left(\tilde{I}_t, l, t\right) = \exp\left(v\log\beta_t + (1-v)\log\tilde{\beta}_t\right), \qquad (4)$$

where $\beta_t$ and $\tilde{\beta}_t$ denote the upper and lower bounds on the variance. Parameter $v$ allows to tune/balance between the two terms in the exponent. A second objective function $\mathcal{L}_{vlb}$ may then be defined as

$$\mathcal{L}_{vlb} = KL(p_\theta(I_{t-1}|I_t, l) \parallel q(I_{t-1}|I_t, I_0)), \qquad (5)$$

and the overall objective function may be given by the weighted sum:

$$\mathcal{L} = \mathcal{L}_{simple} + \lambda\mathcal{L}_{vlb}, \qquad (6)$$

where $\lambda$ is the trade-off parameter to balance the objective functions.

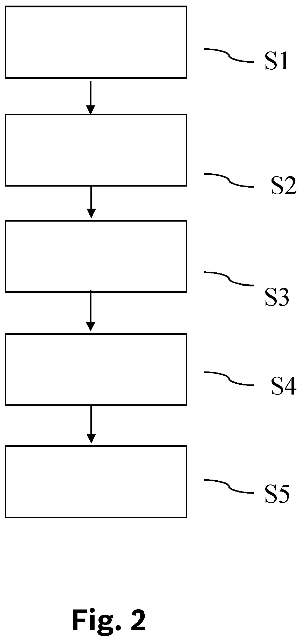

Fig. 2 shows another flowchart for a further embodiment of a method described herein. In a step S1, a set of training data is received, wherein each training data point comprises a noisy image $\tilde{I}$ and corresponding layouts $\{b_i, l_i\}, i = 1, ..., N$ comprising bounding boxes $b_1, ..., b_N$ and labels $l_1, ..., l_N$ assigned to the bounding boxes. In step S2 object probabilistic masks $M_i^0$ for a training data point are determined by subnetwork 101. In step S3, a feature map for the noisy image $\tilde{I}$ of the training data point is determined by the encoder part. By a $j^{th}$ normalization layer of the decoder part, an output feature map is determined from an input feature map of the $j^{th}$ normalization layer in step S4 by normalization of the input feature map and a subsequent affine transformation with parameters $\gamma$ and $\beta$ of the $j^{th}$ normalization layer. In step S5 an output image $I$ is determined as output of the decoder part and parameters of the machine learning system 100 are adjusted subject to a training objective.

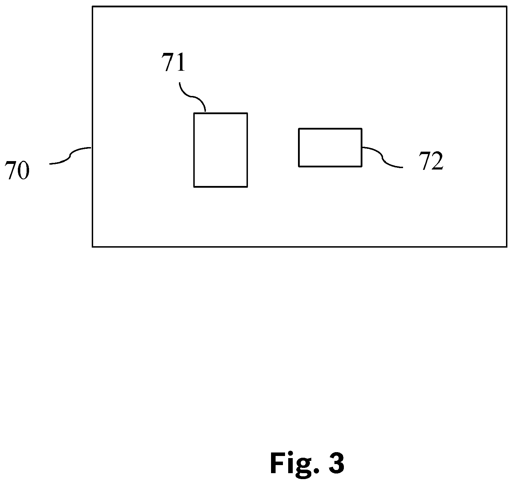

Figure 3 shows an exemplary embodiment of a data processing system 70, which comprises at least one processor 71 and at least one machine-readable storage medium 72, the machine-readable storage medium 72 containing instructions which, when executed by the processor 71, cause the data processing system 70 to carry out a method according to one of the aspects or embodiments of the invention described herein.

The term "computer" may be understood as covering any devices for the processing of pre-defined calculation rules. These calculation rules can be in the form of software, hardware or a mixture of software and hardware.

In general, a plurality can be understood to be indexed, that is, each element of the plurality is assigned a unique index, preferably by assigning consecutive integers to the elements contained in the plurality. Preferably, if a plurality comprises $N$ elements, wherein $N$ is the number of elements in the plurality, the elements are assigned the integers from 1 to $N$. It may also be understood that elements of the plurality can be accessed by their index.

**Claims**

1. Computer-implemented method of training a machine learning system (100) for generating images ($I$) from/with a predefined layout (10),

   wherein the machine learning system is a diffusion probabilistic model with an encoder part and a decoder part, wherein a predefined layout ($\{b_i, l_i\}, i = 1, \ldots, N$) comprises a set of bounding boxes ($b_1, b_N$) and labels ($l_1, l_N$) assigned to the bounding boxes ($b_1, b_N$), wherein a bounding box ($b_1$) defines a target region in an image lattice, wherein the label ($l_1$) assigned to a bounding box ($b_1$) is a word or group of words characterizing a class of at least one object to be generated within the target region defined by the respective bounding box ($b_1$),
   wherein the machine learning system (100) comprises a subnetwork (101) for determining object probabilistic masks ($M_i^0$), wherein the subnetwork receives object-style embeddings (4) and the bounding boxes ($b_1, b_N$) as inputs and determines object probabilistic masks as outputs ($M_i^0$), wherein an object-style embedding is calculated from an embedding (2) of a label ($l_1$) assigned to a bounding box ($b_1$) and a random style (3),
   wherein the machine learning system comprises residual blocks ($R$) with at least one normalization layer, respectively,
   wherein a normalization layer in a residual block ($R$) of the decoder part of the machine learning system comprises weighted layout-aware affine transformation parameters $\gamma$ and $\beta$, wherein the parameters $\gamma$ and $\beta$ are determined from layout-aware affine transformation parameters $\gamma'$ and $\beta'$ by multiplication with a weighted semantic map, **characterized in that**
   the weighted semantic map comprises a sum of two contributions, wherein the first contribution comprises a non-overlapping semantic map computed from the determined and size-ranked object probabilistic masks ($M_i^0$) and wherein the second contribution comprises an edge-aware semantic map, wherein the edge-aware semantic map is a semantic map determined from size-ranked extended object probabilistic masks, wherein an extended object probabilistic mask is extended with respect to a corresponding object probabilistic mask ($M_i^0$) by one pixel, respectively, along the borders,
   the method comprising the steps:

   - Receiving a set of training data, wherein each training data point comprises a noisy image ($\tilde{I}$) and corresponding layouts ($\{b_i, l_i\}, i = 1, \ldots, N$) comprising bounding boxes ($b_1, b_N$) and labels ($l_1, l_N$) assigned to the bounding boxes,

   - Determining by the subnetwork (101) object probabilistic masks ($M_i^0$) for a training data point,
   - Determining by the encoder part a feature map for the noisy image ($\tilde{I}$) of the training data point,
   - Determining by a $j^{th}$ normalization layer of the decoder part an output feature map from an input feature map of the $j^{th}$ normalization layer by normalization of the input feature map and a subsequent affine transformation with parameters $\gamma$ and $\beta$ of the $j^{th}$ normalization layer,
   - Determining an output image ($I$) as output of the decoder part and adjusting parameters of the machine learning system (100) subject to a training objective.

2. Method according to claim 1, wherein the weighted semantic map in the $j^{th}$ residual block of the decoder part is determined by a summation over all weighted semantic maps $W_i^j$, ($i = 1 \ldots N$), with

$$W_i^j = \left( m_i^{j,non} \odot M_i^j \right) + \alpha \cdot \left( m_i^{j,ea} \cdot w_i \right),$$

wherein

   - $w_i$ is a learnable edge weight for object $i$ and $\alpha$ is a hyperparameter,

   - $M_i^j$ is the object probabilistic mask corresponding to object $i$ in the $j^{th}$ residual block,

   - $m_i^{j,non}$ is a non-overlapping semantic map determined from object probabilistic mask $M_i^j$,

- $m_i^{j,ea}$ is an edge-aware semantic map determined from object probabilistic mask $M_i^j$ with an additional extension of the region of mask $M_i^j$ of one pixel at the borders,
- and wherein Q stands for an element wise multiplication.

**3.** Method according to any of the preceding claims, wherein an object probabilistic mask $M_i^{j+1}$ in the (j+1)$^{th}$ residual block of the decoder part is determined by

$$M_i^{j+1} = (1-\eta) \cdot M_i^0 + \eta \cdot M_i^j,$$

with $\eta$ a weight determined during training of the machine learning system and $M_i^0$ the initial probabilistic mask of object $i$, $i = 1, ... N$, determined by the subnetwork.

**4.** Method according to any of the preceding claims, wherein the non-overlapping semantic map is determined from the object probabilistic masks $M_i^j$ by successively assigning labels to the pixels of the non-overlapping semantic map, wherein each pixel is assigned one label, wherein a pixel is assigned the label from mask $M_i^j$, if $M_i^j$ is the size-wise smallest mask involving the pixel.

**5.** Method according to any of the preceding claims, wherein the layout-aware affine transformation parameters $\gamma'$ and $\beta'$ are determined by the following steps:

- Determining object-specific scaling $\gamma_c^j$ and bias $\beta_c^j$ values from the object-style embeddings (4) by a linear projection,

- Expanding $\gamma_c^j$ and $\beta_c^j$ to their corresponding bounding boxes by assigning the respective values of $\gamma_c^j$ and $\beta_c^j$ to each pixel of the respective corresponding bounding box to obtain the parameters $\gamma'$ and $\beta'$.

**6.** Method according to any of the preceding claims, wherein the machine learning system 100 further comprises mask attention layers in the decoder part, wherein the key and value embeddings in the k$^{th}$ mask attention layer are determined from key and value linear projections of the k$^{th}$ feature map in the decoder part, wherein determination of the query embedding comprises the following steps:

- Determining a pixel-wise semantic map $m^{k,attn}$, by first arranging the object probabilistic masks $Mk$, $i = 1, ... N$, according to their positions predefined by the layout,

wherein $Mk$ is the object probabilistic mask corresponding to object $i$ in the k$^{th}$ residual block preceding the k$^{th}$ mask attention layer,
and, by, second, keeping at each pixel only the value of the respective object probabilistic mask $Mk$, which is the highest value out of the values of the object probabilistic masks $M_i^k$, $i = 1,...,N$, contributing to the respective pixel,

- Determining an extended pixel-wise semantic map $\tilde{m}^{k,attn}$ from the pixel-wise semantic map $m^{k,attn}$ by extending the pixel-wise semantic map $m^{k,attn}$ at each pixel with the respective object-style embedding of object $i$ according to the object probabilistic mask $Mk$ determining the value of the pixel,
- Determining a query embedding by embedding a query linear projection of the extended pixel-wise semantic map $\tilde{m}^{k,attn}$.

7. Method according to any of the preceding claims, wherein images *I* generated by the trained machine learning system are training data for an image classifier for image classification, particularly based on low-level features.

8. Method according to claim 7, wherein the images *I* generated by the trained machine learning system 100 depict a driving environment of at least a semi-autonomous robot, or at least a section of a defective sample or defective machine of a production line, or an environmental situation from the perspective of a surveillance camera.

9. Training system, which is configured to carry out the training method according to any one of the claims 1 to 8.

10. A computer program comprising instructions which, when the program is executed by a computer, cause the computer to carry out the method according to any of the claims 1 to 8.

11. A computer-readable storage medium (72) having stored thereon the computer program of claim 10.

**Fig. 1**

S1

S2

S3

S4

S5

Fig. 2

**Fig. 3**

EP 4 645 211 A1

**EUROPEAN SEARCH REPORT**

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SUN WEI ET AL: "Image Synthesis From Reconfigurable Layout and Style", 2019 IEEE/CVF INTERNATIONAL CONFERENCE ON COMPUTER VISION (ICCV), IEEE, 27 October 2019 (2019-10-27), pages 10530-10539, XP033723184, DOI: 10.1109/ICCV.2019.01063 [retrieved on 2020-02-24] * Abstract; Section 3 * | 1-11 | INV. G06T5/60 G06T11/00 |
| A | SHI YONG ET AL: "Intelligent layout generation based on deep generative models: A comprehensive survey", INFORMATION FUSION, [Online] vol. 100, 1 December 2023 (2023-12-01), page 101940, XP093209518, US ISSN: 1566-2535, DOI: 10.1016/j.inffus.2023.101940 Retrieved from the Internet: URL:https://pdf.sciencedirectassets.com/27 2144/1-s2.0-S1566253523X00086/1-s2.0-S1566 253523002567/main.pdf?X-Amz-Security-Token =IQoJb3JpZ2luX2VjEOD/////////wEaCXVzLWVhc 3QtMSJIMEYCIQCFXzLKyogs6n57OkCzizLPEX97YDY k8Kwy8WxZiuhHegIhAMyzSNcPmI+PW+xdQ9rSNuhBu 1EMD1J19MkSJXNBSrRdKrIFCCkQBRoMMDU5MDAzNTQ 2ODY1IgzqK> [retrieved on 2024-09-27] * Section 2 * | 1-11 | |

TECHNICAL FIELDS SEARCHED (IPC)

G06T
G06V
G06N

-/--

The present search report has been drawn up for all claims

| Place of search | Date of completion of the search | Examiner |
|---|---|---|
| The Hague | 21 October 2024 | Thean, Andrew |

page 1 of 2

Europäisches Patentamt
European Patent Office
Office européen des brevets

**EUROPEAN SEARCH REPORT**

**Application Number**

EP 24 17 3314

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HE SEN ET AL: "Context-Aware Layout to Image Generation with Enhanced Object Appearance", 2021 IEEE/CVF CONFERENCE ON COMPUTER VISION AND PATTERN RECOGNITION (CVPR), IEEE, 20 June 2021 (2021-06-20), pages 15044-15053, XP034008623, DOI: 10.1109/CVPR46437.2021.01480 [retrieved on 2021-10-15] * Sections 3 and 4 * ----- | 1-11 | |
| A | WANG BO ET AL: "Interactive Image Synthesis with Panoptic Layout Generation", 2022 IEEE/CVF CONFERENCE ON COMPUTER VISION AND PATTERN RECOGNITION (CVPR), IEEE, 18 June 2022 (2022-06-18), pages 7773-7782, XP034196063, DOI: 10.1109/CVPR52688.2022.00763 [retrieved on 2022-09-27] * Section 3.2.2 * ----- | 1-11 | TECHNICAL FIELDS SEARCHED (IPC) |

The present search report has been drawn up for all claims

| Place of search | Date of completion of the search | Examiner |
|---|---|---|
| The Hague | 21 October 2024 | Thean, Andrew |

EPO FORM 1503 03.82 (P04C01)